# EUROPÄISCHE PATENTANMELDUNG

(11) **EP 0 984 271 A2**
(43) Veröffentlichungstag der Anmeldung: **08.03.2000**
(21) Anmeldenummer: 99250304.5
(22) Anmeldetag: 01.09.1999
(51) Int. Cl.: G01N 21/88

(54) **Beleuchtungsanlage zur Abmusterung von Oberflächenfehlern auf glänzenden Oberflächen, insbesondere lackierten Automobilkarosserien**

(30) Priorität: 02.09.1998 DE 19839882
(71) Anmelder: Dr.-Ing. Willing GmbH, 96110 Schesslitz-Burgellern (DE)
(72) Erfinder: Willing, Achim, 96110 Schesslitz-Doschendorf (DE)
(74) Vertreter: Pfenning, Meinig & Partner

(57) **Zusammenfassung**

Es wird eine Beleuchtungsanlage zur Abmusterung von Oberflächenfehlern auf glänzenden Oberflächen insbesondere lackierten Automobilkarosserien vorgeschlagen, die mindestens zwei Beleuchtungskomponenten aufweist. Die erste Beleuchtungskomponente dient zur Abmusterung topografischer Fehlerarten und wird von einer Leuchtenanordnung erzeugt, deren Leuchtdichtestruktur mit Hell-Dunkelkanten auf der abzumusternden Oberfläche aus einer ersten Beobachtungsrichtung für topografische Fehlerarten erkennbar ist. Die zweite Beleuchtungskomponente dient zur Arbeitsfeldbeleuchtung und Abmusterung nicht-topografischer Fehlerarten und wird von einer Leuchtenanordnung erzeugt, die eine solche gebündelte Lichtstärkeverteilung aufweist, daß ihre auf die Oberfläche gerichtete Strahlung nicht in eine zweite Beobachtungsrichtung für nicht-topografische Fehlerarten reflektiert wird. Die Leuchtenanordnung für die erste Beleuchtungskomponente ist derart angeordnet oder ausgebildet, daß ihre auf der Oberfläche abgebildete Leuchtdichtestruktur nicht aus der zweiten Beobachtungsrichtung erkennbar ist. Dabei liegt die erste Beobachtungsrichtung für topografische Fehlerarten schräg in Bezug auf die abzumusternde Oberfläche und die zweite Beobachtungsrichtung für nicht-topografische Fehlerarten ist senkrecht zur abzumusternden Oberfläche ausgerichtet.

## Beschreibung

Die Erfindung betrifft eine Beleuchtungsanlage zur Abmusterung von Oberflächenfehlern auf glänzenden Oberflächen, insbesondere lackierten Automobilkarosserien.

Zur Kontrolle von Oberflächenfehlern auf fertig lackierten, hochglänzenden Karosserien werden diese auf einem Transportband schrittweise oder kontinuierlich bewegt, wobei sie einer speziellen Beleuchtung ausgesetzt sind, bei der die Kontrollarbeiten und auch Reparaturen durchgeführt werden sollen. Es bestehen auch Anlagen für länger dauernde Reparaturarbeiten, in denen die Karosserien ausgegliedert werden und unbewegt bleiben. Nach dem Stand der Technik haben sich für diesen Anwendungszweck Langfeldleuchten mit Leuchtstofflampen in Beleuchtungsgeometrien durchgesetzt, bei denen die Leuchten in regelmäßigen Abständen näherungsweise auf Halbkreisen um die Längsachse der Karosserie angeordnet sind. Somit wird ein Beleuchtungstunnel gebildet, dessen Gerüst mit Leuchten besetzt ist, deren Lichtstärkeverteilung der Karosserie jeweils zugewandt ist.

Die Leuchten erfüllen dabei eine Doppelfunktion, einerseits wird für die Erkennung topografischer Fehler auf der ansonsten glatten Karosserieoberfläche eine Beleuchtungsstruktur zur Verfügung gestellt, die sich auf der Karosserie als Leuchtdichtestruktur abbildet, wobei an Verwerfungen dieser an sich regelmäßigen Struktur Fehler erkannt werden können und andererseits wird durch die gleichen Leuchten eine Grundbeleuchtung zur Verfügung gestellt, die Reparaturarbeiten ermöglicht.

Die Karosserien müssen aber auch auf nicht-topografische Oberflächenfehler geprüft werden, bei denen keine Verwerfungen oder Verformungen der Oberfläche stattfinden, wie beispielsweise Farbfehler, Wolkigkeit, Stellen, die ausgemagert sind oder Schleifstellen und dergleichen. Diese Fehler sind nur gut erkennbar, wenn sie von keiner Leuchtdichtestruktur überlagert werden.

Die Beleuchtungsanlagen nach dem Stand der Technik haben daher den Nachteil, daß die Grundbeleuchtung durch die Struktur der Leuchtenabbildungen überlagert wird, und eine Abmusterung der nicht-topografischen Oberflächenfehler deshalb nur in relativ kleinen Feldern zwischen den Leuchtenabbildungen möglich ist. Weiterhin ist bei diesen Anlagen die für die Bereitstellung einer ausreichend hellen Grundbeleuchtung benötigte hohe Leuchtdichte der Lampen, durch die eine starke physiologische und psychologische Blendung bei direktem Einblick, beispielsweise in gegenüber liegende Leuchten auftritt, nachteilig. Zudem entstehen auf hellen Karosserien so hohe Leuchtdichten, daß die Beleuchtungsstrukturen der Beleuchtungsanlage sich nicht mehr genügend kontrastreich abbilden. Wird deshalb die Grundhelligkeit der Anlage gedimmt, wo wird auch die Abbildung der Leuchten auf der Karosserie dunkler und der Kontrast ist wiederum für eine gute Erkennung nicht ausreichend. Im Stand der Technik wurden deshalb Lampen unterschiedlicher Lichtfarbe eingesetzt, die an weißen Oberflächen den Leuchtdichtekontrast durch einen Farbkontrast ersetzen. Durch die damit verbundene Veränderung der Lichtfarbe der Grundbeleuchtung ergibt sich wiederum der Nachteil, daß eine Farberkennung nicht mehr in der benötigten Genauigkeit möglich ist.

Der Erfindung liegt daher die Aufgabe zugrunde, eine Beleuchtungsanlage zu schaffen, die die oben genannten Nachteile vermeidet und die eine gute Erkennbarkeit von topografischen und nicht-topografischen Fehlerarten mit guter Genauigkeit gestattet.

Diese Aufgabe wird erfindungsgemäß durch die Merkmale des Hauptanspruchs gelöst.

Entsprechend der Erfindung liefert die Beleuchtungsanlage zwei prinzipiell unterschiedliche Beleuchtungskomponenten, nämlich eine Komponente, die eine Beleuchtungsstruktur zur Erkennung der topografischen Fehler zur Verfügung stellt und eine Komponente, die eine Grundbeleuchtung zur Erkennung der übrigen Fehler und der Farbe ermöglicht. Die erste Komponente wird von einer Leuchtenanordnung mit einer Beleuchtungsstruktur erzeugt, die sich als Leuchtdichtestruktur mit Hell-Dunkelkanten auf der Karosserie abbildet und die aus einer ersten Beobachtungsrichtung zur Erkennung topografischer Fehlerarten erkennbar ist. Diese ist schräg zur Oberfläche ausgerichtet. Die Leuchtenanordnung kann dabei im Wesentlichen tunnelförmig um die Karosserie herum angeordnet sein, sowohl über Kopf als auch seitlich neben der Karosserie sowie auch gegebenenfalls im Bodenbereich. Dabei ist die Lichtverteilung der Leuchten der Leuchtenanordnung so gestaltet bzw. die Leuchten sind so angeordnet, daß sie bei senkrechtem Einblick auf die Karosserieoberfläche dunkel bleiben bzw. nicht zu sehen sind. Durch diese Maßnahme wird vermieden, daß in Blickrichtung zur Abmusterung nicht-topografischer Fehler, die senkrecht zur Oberfläche gerichtet ist, sich diese Leuchten bereits ungewollt in dem Sehfeld der abmusternden Person abbilden.

Die Grundbeleuchtung, die die zweite Beleuchtungskomponente darstellt, ist erfindungsgemäß so ausgebildet, daß für eine Person in Arbeitsposition keine bzw. möglichst wenig Reflexe der Beleuchtungsstruktur auf der Karosserie erkennbar werden und weiterhin wird auch die zweite Beleuchtungskomponente so dimensioniert, daß in senkrechten Blickrichtungen, z.B. auch zur gegenüberliegenden Seite keine Direktblendung und möglichst auch keine Reflexblendung auftritt. Die Leuchten für die zweite Beleuchtungskomponente zur Arbeitsfeldbeleuchtung und Abmusterung nicht-topografischer Fehlerarten weisen eine Lichtverteilung auf, bei der die Lichtstrahlen zumindest in einer Hauptstrahlrichtung vorzugsweise unter 45° auf die Karosserieoberfläche auftreffen. Dabei weist die Lichtverteilung zumindest in denjenigen Ebenen, die die Beobachtungsrichtung senkrecht zur Oberfläche (zweite Beobachtungsrichtung) enthalten, eine enge Bündelung auf. Dies kann in regelmäßigen Abständen durch Leuchten mit punktförmigen oder kompakten Lampen realisiert werden, deren Lichtstärkeverteilung zumindest in der Hauptstrahlrichtung eng gebündelt sind. Derartige Lichtquellen besitzen sehr hohe Leuchtdichten und sind deshalb besonders geeignet, Schleif- und Polierfehler erkennbar zu machen. Besonders vorteilhaft ist jedoch, Leuchten mit langgestreckten Lichtquellen, z.B. Leuchtstofflampen zu benutzen, deren Lichtstärkeverteilungen nur in der Hauptstrahlrichtung eng gebündelt sind. Diese Lampen besitzen niedrigere Leuchtdichten, so daß die verursachte Blendung reduziert wird. Auch sind für die Farbabmusterungen benötigte Lichtfarben mit Leuchtstofflampen besser zu realisieren. Vorteilhaft kann eine Mischung zwischen beiden Leuchtentypen sein, so daß die Vorteile beider Systeme genutzt werden können. Auch ist es möglich, beide Systeme abwechselnd oder schaltbar zu verwenden.

Die Leuchten für die zweite Beleuchtungskomponente können im Wesentlichen parallel zur Längsachse bzw. zur Transportrichtung angeordnet werden, wobei auch andere Aufstellungsgeometrien möglich sind, z.B. eine Anordnung in vertikaler Richtung oder über Kopf seitlich neben der Karosserie sowie auch im Bodenbereich.

Die Leuchtenanordnung für die erste Beleuchtungskomponente und die Leuchtenanordnung für die zweite Beleuchtungskomponente können in einer Leuchtenanordnung zusammengefaßt sein oder in zwei getrennten Leuchtenanordnungen, wobei die letztere Möglichkeit die Flexibilität erhöht. Es kann nämlich die Leuchtdichte der lichtabstrahlenden Flächen der Leuchtenanordnung für die erste Beleuchtungskomponente zur Erkennung topografischer Fehler so gering wie möglich gewählt werden, derart, daß eine Direktblendung vermieden wird, aber ein ausreichender Kontrast der auf der Oberfläche erkennbaren Leuchtdichtestruktur gegeben ist. Dabei ist die Leuchtdichte vorzugsweise kleiner als 10000 cd/m² und besonders bevorzugt kleiner als 5000 cd/m² zu wählen. Andererseits kann die Lichtstärke der Leuchtenanordnung für die zweite Beleuchtungskomponente so groß gewählt werden, daß die Beleuchtungsstärke der aus der zweiten Beobachtungsrichtung gesehenen Oberfläche für die Abmusterung ausreichend hoch ist, was beispielsweise bei 500 lx und größer gegeben ist.

Die Leuchten der Leuchtenanordnungen für beide Komponenten strahlen demnach nur unter schrägen Winkeln ab, so daß die betroffene Person durch Wahl ihres Blickwinkels senkrecht zur Oberfläche oder schräg zur Oberfläche bewußt entscheiden kann, ob sie Fehler in einem gleichmäßig ausgeleuchteten Feld ohne Irritation durch Leuchtdichtestrukturen erkennen will, also nicht-topografische Fehler, oder ob topografische Fehler erkennbar werden sollen, die sich durch eine Verformung der Oberfläche auswirken und für deren Erkennung die Abbildung einer Leuchtdichtestruktur benötigt wird.

Bei entsprechender Anordnung der Leuchten für, die zweite Beleuchtungskomponente im Verhältnis zu den Leuchten für die Abmusterung topografischer Fehler kann die oben geschilderte Unterscheidung der für beide Fehlerarten benötigten Blickrichtungen auch bei einer Anordnung der Leuchten der ersten Beleuchtungskomponente parallel zur Längsachse der Karosserie entsprechend der Erfindung realisiert werden. Dies gilt insbesondere für im Bodenbereich und über Kopf angeordnete Leuchten zur Abmusterung der bodennahen Partie der seitlichen Karosserieflächen und zur Abmusterung der horizontalen Flächen.

Wie schon erwähnt müssen die Leuchten zur Strukturbeleuchtung keinen Beitrag zur Grund- oder Allgemeinbeleuchtung liefern, somit kann ihre Leuchtdichte soweit reduziert werden, daß Blendungserscheinungen vermieden werden. Reicht die Leuchtdichte der Strukturbeleuchtung an sehr hellen Karosserien wegen der durch die Grundbeleuchtung (zweite Beleuchtungskomponente) verursachten hohen Leuchtdichten für eine Fehlererkennung nicht aus, so kann die Grundbeleuchtung, die sich im direkten Nahfeld der Karosserie befindet, so gedimmt werden, daß die Leuchtdichte auf der Karosserie eine Abbildung der Beleuchtungsstruktur nicht verhindert.

Es kann vorteilhaft sein, daß die Leuchten der ersten Beleuchtungskomponente zur Lieferung der Leuchtdichtestruktur unter sehr flachen Winkeln wieder abgeschirmt sind, um den Gesamteindruck des Raumes angenehm zu gestalten.

Weitere vorteilhafte Ausgestaltungen und Verbesserungen ergeben sich aus den Unteransprüchen.

Ausführungsbeispiele der Erfindung sind in der Zeichnung dargestellt und werden in der nachfolgenden Beschreibung näher erläutert. Es zeigen:
- Fig. 1: einen Querschnitt durch eine Karosserie mit einer Leuchtanordnung nach einem ersten Ausführungsbeispiel,
- Fig. 2: eine Draufsicht entsprechend Fig. 1,
- Fig. 3: einen Querschnitt durch eine Karosserie mit einer Leuchtanordnung nach einem zweiten Ausführungsbeispiel,
- Fig. 4: eine Draufsicht entsprechend Fig. 3,
- Fig. 5: einen Querschnitt durch eine Karosserie mit einer Leuchtanordnung nach einem dritten Ausführungsbeispiel,
- Fig. 6: eine Draufsicht entsprechend Fig. 5,
- Fign. 7 und 8: Lichtstärkeverteilungen, die bei den ersten bis dritten Ausführungsbeispielen verwendet wird,
- Fig. 9: einen Schnitt durch eine Karosserie mit einer Leuchtenanordnung nach einem vierten Ausführungsbeispiel,
- Fig. 10: eine Lichtstärkeverteilung die in Fig. 9 verwendet wird, und
- Fig. 11: einen Schnitt durch eine Karosserie mit einer Leuchtenanordnung nach einem fünften Ausführungsbeispiel,
- Fig. 12 bis 14: einen Schnitt, eine Seitenansicht und eine Draufsicht mit einer Leuchtanordnung nach einem sechsten Ausführungsbeispiel der Erfindung,
- Fign. 15 und 16: Lichtstärkeverteilungen die bei dem sechsten Ausführungsbeispiel verwendet werden,
- Fig. 17 und Fig. 18: Draufsichten auf eine Karosserie mit einer Leuchtenanordnung nach einem siebenten und einem achten Ausführungsbeispiel,
- Fig. 19: einen Schnitt durch eine Karosserie mit einer Beleuchtungsanordnung nach einem neunten Ausführungsbeispiel der Erfindung,
- Fig. 20: eine Seitenansicht entsprechend Fig. 19,
- Fig. 21: einen Schnitt durch eine Leuchte für die erste Beleuchtungskomponente nach einem ersten Ausführungsbeispiel,
- Fig. 22: einen Schnitt durch eine Leuchte für die erste Beleuchtungskomponente nach einem zweiten Ausführungsbeispiel, und
- Fig. 23: einen Schnitt durch eine Leuchte für die erste Beleuchtungskomponente nach einem dritten Ausführungsbeispiel.

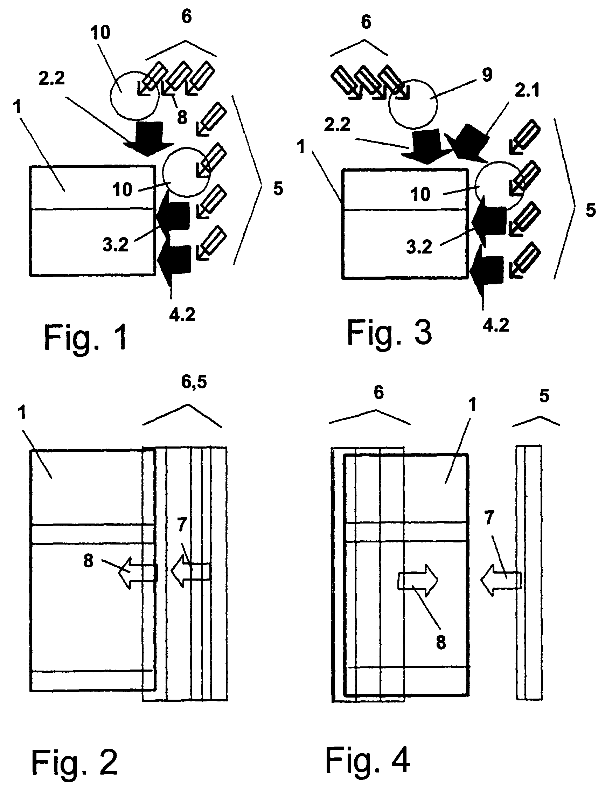

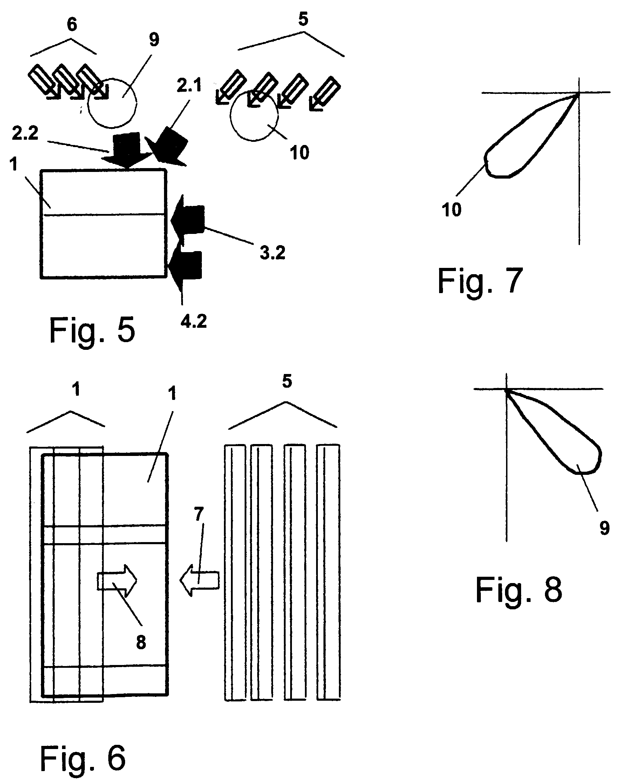

Die in Fig. 1 dargestellte Anordnung zeigt schematisch eine Karosserie 1 im Schnitt und Leuchten 6 im Dachbereich, die nebeneinander angeordnet sind und das Dach der Karosserie aus schräger Richtung 8 beleuchten. Weiterhin sind seitlich neben der Karosserie Leuchten 5 übereinander angeordnet, die die Seite der Karosserie 1 aus schräger Richtung 7 beleuchten. Ein Beobachter, der eine menschliche Person oder auch eine elektronische oder visuelle Erfassungseinrichtung, wie eine Sensoreinrichtung oder eine Kamera sein kann, beobachtet den Dachbereich aus der senkrecht zu diesem angeordneten Blickrichtung 2.2, den Seitenbereich aus der senkrecht zum Seitenbereich angeordneten Blickrichtung 3.2 und den unteren Bereich aus der Blickrichtung 4.2, die gleichfalls senkrecht zur Fläche liegt. Die Beobachtungsrichtungen entsprechen der Blickrichtung bei Reparaturarbeiten und bei der Abmusterung von Oberflächeneigenschaften ohne topografische Effekte. Dazu muß die Beleuchtung durch die Leuchten 5, 6 so ausgebildet sein, daß das ausgesandte Licht nicht gerichtet in die Beobachtungsrichtung reflektiert wird. Eine beispielhafte Lichtstärkeverteilung 10 der Leuchten 5, 6 ist in Fig. 7 dargestellt, wobei zu erkennen ist, daß die Leuchte in ihrer Hauptstrahlrichtung schräg auf die Oberfläche der Karosserie gerichtet ist. Die Leuchten 5, 6 sind vorzugsweise als Langfeldleuchten mit Leuchtstofflampen ausgebildet, sie können jedoch auch als Punktleuchten oder als Kombination derselben ausgeführt sein. Wie zu erkennen ist, ist die Lichtverteilung 10 eng gebündelt, wobei diese eng gebündelte Lichtverteilung in Ebenen vorgesehen ist, die die als zweite Beobachtungsrichtung bezeichnete Richtung senkrecht zur Karosserie enthalten. Fig. 2 zeigt die Draufsicht auf die Karosserie 1 mit den seitlich angeordneten Leuchten 5 und den Dachleuchten 6. Die Beleuchtungsrichtung 7 ist schräg auf die Seite der Karosserie gerichtet, die Beleuchtungsrichtung 8 ist schräg auf das Dach gerichtet.

Aufgrund der Lichtstärkeverteilung entsprechend Fig. 7 wird bei senkrechter Blickrichtung (zweite Beobachtungsrichtung) im Arbeitsfeld eine Beleuchtungsstruktur nicht sichtbar. Diese Beleuchtungsstruktur könnte sichtbar werden, wenn die Beobachtungsrichtung im Spiegelwinkel der auf die Karosserie auftreffenden Strahlung läge. Dies ist beispielhaft in Fig. 3 dargestellt, in der im Vergleich zu Fig. 1 die Leuchten 6 an der gegenüberliegenden Seite angeordnet sind, so daß sie eine Lichtstärkeverteilung 9 entsprechend Fig. 8 aufweisen. Die Beobachtungsrichtung 2.1 ist schräg zur Dachoberfläche gerichtet, wodurch die Beleuchtungsstruktur der Leuchten 6 als auf der Dachoberfläche abgebildete Leuchtdichtestruktur mit Hell-Dunkelkanten zu erkennen ist. Dadurch können topografische Fehler der Oberfläche erkannt werden. Gleichzeitig können auch nicht-topografische Fehler abgemustert werden, wenn die Blickrichtung entsprechend 2.2 senkrecht zur Oberfläche liegt. In diesem Fall können mit denselben Leuchten abhängig von der Blickrichtung sowohl topografische als auch nicht-topografische Fehler erkannt werden. Dies gilt gleichermaßen für die Ausführungsform nach Fig. 5 und Fig. 6 bei denen die Leuchten 5 nunmehr auch im Dachbereich angeordnet sind, wobei die Lichtverteilungen 9, 10 beibehalten werden.

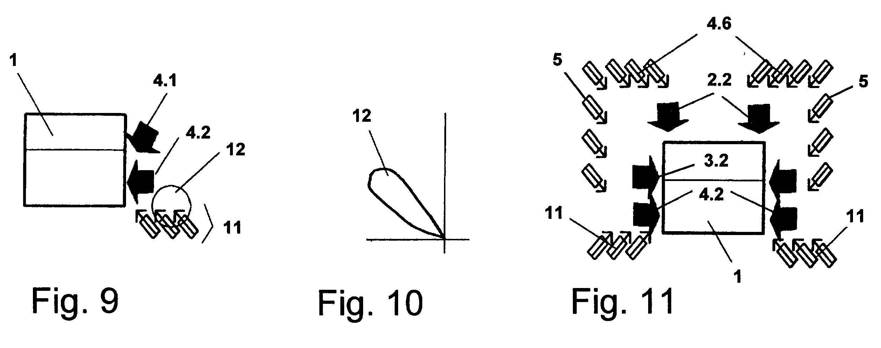

In Fig. 9 sind schräg strahlende Leuchten, die eine Lichtstärkeverteilung 12 entsprechend Fig. 10 aufweisen, im Bodenbereich angeordnet, die wiederum als Langfeldleuchten oder Leuchtbänder ausgebildet sein können. Dabei erscheinen die Lichtaustrittsflächen für den Beobachter mit der Blickrichtung 4.2 zur Abmusterung von nicht-topografischen Fehlern dunkel, d.h. eine Beleuchtungsstruktur wird nicht sichtbar, während aus der Blickrichtung 4.1 eine Leuchtdichtestruktur erkennbar ist, so daß topografische Fehler gefunden werden können.

Fig. 11 zeigt im Schnitt die Karosserie 1 mit einer Beleuchtungsgeometrie entsprechend Fig. 1 in Kombination mit Fig. 9, jedoch nunmehr symmetrisch auf beiden Seiten der Karosserie 1. Auch hier wird bei senkrechter Blickrichtung (zweite Beobachtungsrichtung) 2.2, 3.2, 4.2 im Arbeitsfeld eine Beleuchtungsstruktur nicht sichtbar, während unter entsprechenden, nicht dargestellten schrägen Blickrichtungen (erste Beobachtungsrichtung) topografische Fehler erkennbar gemacht werden können.

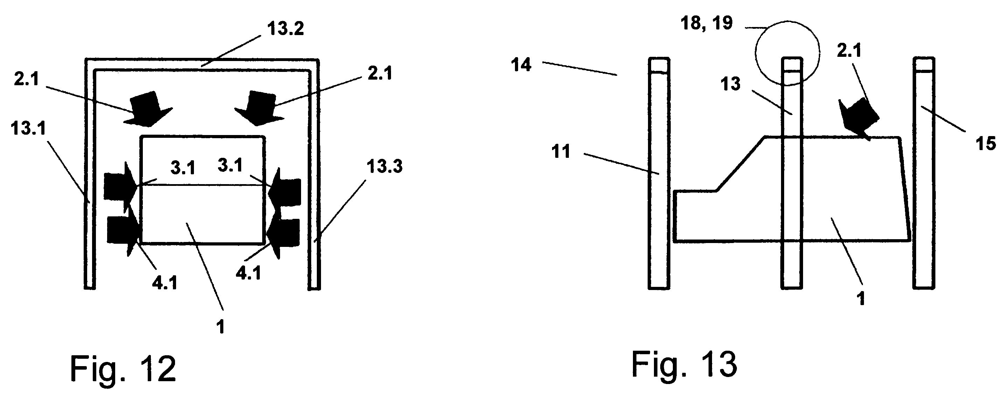

In den Fign. 12 bis 14 ist ein weiteres Ausführungsbeispiel im Schnitt, in der Seitenansicht und in der Draufsicht dargestellt, wobei hier besonders Leuchten für die erste Beleuchtungskomponente zur Erkennung von topografischen Fehlern dargestellt sind, zusätzlich können jedoch auch Leuchten entsprechend den Ausführungsbeispielen nach Fig. 1 bis Fig. 11 vorgesehen sein, die die zweite Beleuchtungskomponente bilden und zur Abmusterung von nicht-topografischen Fehlern dienen.

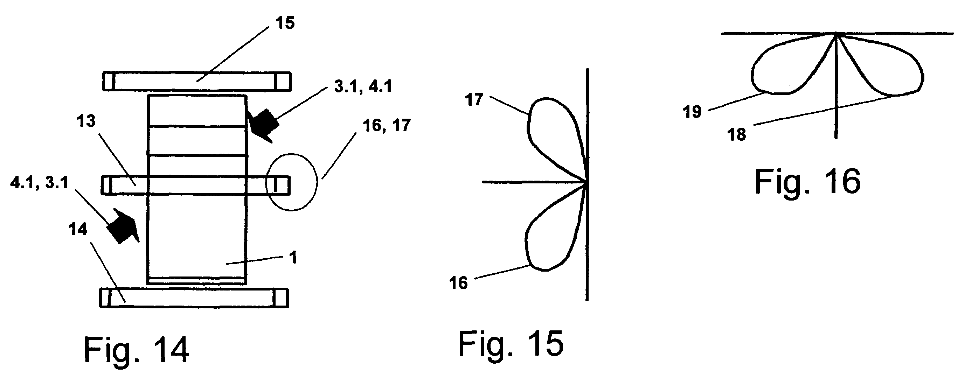

Die Leuchtenanordnung entsprechend Fig. 12 bis 14 weist Leuchtbänder auf, die jeweils in Ebenen quer zur Längsachse der Karosserie 1 angeordnet sind und sich in einem vorbestimmten Abstand, der beispielsweise 1 bis 3 m betragen kann, wiederholen. Die Leuchtbänder sind an einem halbtunnelförmigen Rahmen 13, 14, 15, der in dem Ausführungsbeispiel U-förmig ausgebildet ist, aber auch bogenförmig oder vieleckig sein kann, angeordnet. Die Leuchtenbänder in senkrechter Ausrichtung 13.1, 13.3 weisen eine in der Fig. 14 erkennbare Lichtstärkeverteilung 16, 17 entsprechend Fig. 15 auf, so daß sie die Seitenflächen der Karosserie 1 entsprechend Fig. 14 nach beiden Seiten schräg beleuchten. Die horizontalen Lichtbänder entsprechend 13.2 haben eine Lichtstärkeverteilung entsprechend Fig. 16 und beleuchten den Dachbereich in der Ansicht nach Fig. 13 schräg zu beiden Seiten. Im Dachbereich wird die Karosserie aus den Richtungen 2.1 und im Seitenbereich aus den Richtungen 3.1 und 4.1 schräg zu der Oberfläche der Karosserie 1 beobachtet (erste Beobachtungsrichtung). In diesen Richtungen bilden sich die Leuchtenbänder in senkrechter Ausrichtung 13.1 und 13.3 sowie in horizontaler Ausrichtung 13.2 quer zur Längsachse der Karosserie auf der glänzenden Oberfläche der Karosserie ab (erste Beleuchtungskomponente). Dadurch können die topografischen Fehler beobachtet werden. Die Lichtstärkeverteilungen können auch einseitig sein, z.B. am Ende einer Transportstraße oder eines Auditplatzes. Aus der jeweils gegenüberliegenden Seite erscheinen die Leuchten 13.1 und 13.3 dunkel, erst unter schräger Einsicht werden sowohl in direkter Sicht als auch in der Abbildung über die Karosserieoberfläche die Maxima der Lichtverteilung 16 und 17 bzw. 18 und 19 wirksam.

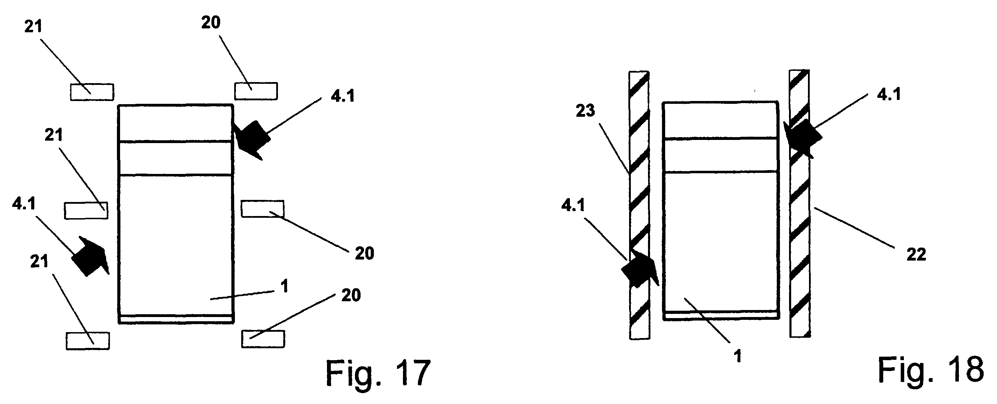

In den Fign. 17 und 18 sind weitere Ausführungsbeispiele für die Anordnung von Leuchten für die erste Beleuchtungskomponente dargestellt. In Fig. 17 sind Leuchten 20 und 21 für die erste Beleuchtungskomponente zur Erkennung topografischer Fehler auf der unteren Karosserieseite als Leuchtfelder ausgebildet und liegen quer zur Längsachse der Karosserie. Aus der schrägen ersten Beobachtungsrichtung 4.1 sind die beispielsweise vollflächig zumindest in Richtungen auf die Karosserie diffus strahlende Leuchtfelder ausgebildeten Leuchten als Muster zu erkennen und sie leisten wegen der Ausrichtung ihrer lichtabstrahlenden Flächen senkrecht zur Seitenwand der Karosserie nur einen geringen Beitrag zur Beleuchtungsstärke und vermindern deshalb nicht die Kontrasterkennung.

Die in Fig. 18 in der Draufsicht dargestellten Leuchten 22, 23 für die erste Beleuchtungskomponente zur Erkennung topografischer Fehler auf der unteren Karosserieseite sind als z.B. vollflächig zumindest in Richtungen auf die Karosserie diffus strahlende Leuchtbänder im Boden parallel zur Längsachse der Karosserie angebracht und ihre Leuchtdichtestruktur kann aus den Beobachtungsrichtungen 4.1 erkannt werden. Wie oben leisten sie wegen der Ausrichtung ihrer lichtabstrahlenden Flächen senkrecht zur Seitenwand der Karosserie nur einen geringen Beitrag zur Beleuchtungsstärke, sie vermindern deshalb nicht die Kontrasterkennung. Die Leuchtbänder 22 und 23 können auch unterbrochen sein.

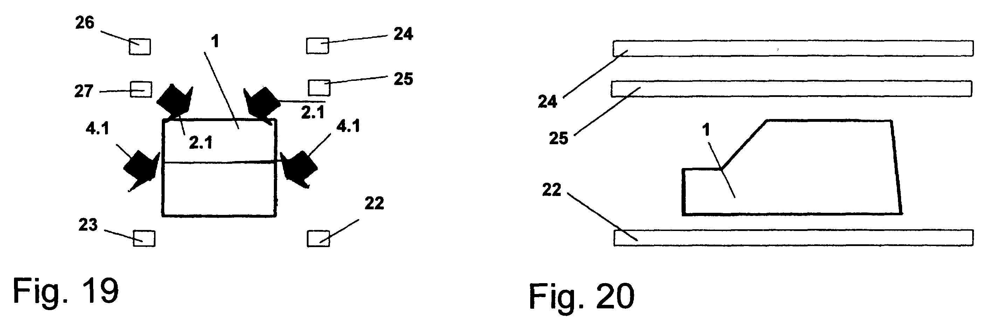

In Fign. 19 und 20 ist die Karosserie 1 im Schnitt und in der Seitenansicht dargestellt. Hier werden die Leuchten 22, 23 im Bodenbereich durch Leuchten 24, 25, 26, 27 im Dachbereich ergänzt. In den Blickrichtungen 2.1 können durch die von den Leuchten 24-27 dargebotenen Streifen auf den horizontalen Flächen topografische Fehler erkannt werden. Die Leuchtenbänder 24 und 25 bzw. 26 und 27 liegen übereinander und ihre lichtabstrahlenden Flächen, die denen der Leuchten 22, 23 entsprechen, können sowohl senkrecht nach unten als auch waagerecht zur Seite abstrahlen. Auch hier können in Blickrichtung 4.1 topografische Fehler im unteren Seitenbereich erkannt werden.

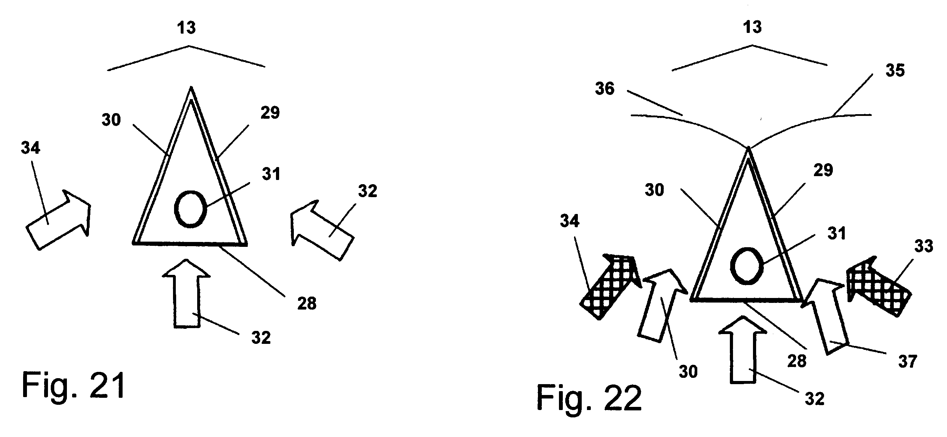

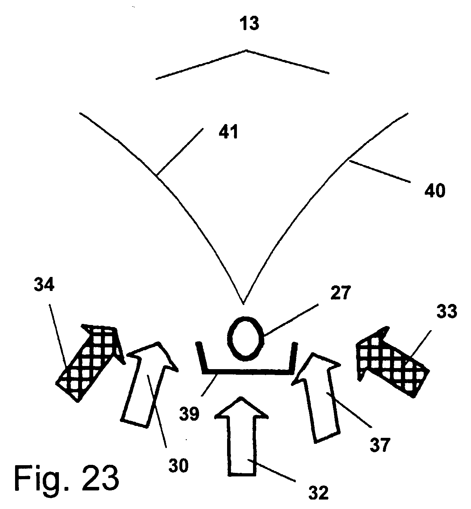

In den Fign. 21 bis 23 sind spezielle Leuchten für die erste Beleuchtungskomponente, d.h. zur Erzeugung von Leuchtdichtestrukturen dargestellt, wie sie im Ausführungsbeispiel nach den Fign. 12-14 verwendet werden können. Diese Leuchten können parallel oder quer zur Längsachse der Karosserie ausgerichtet sein. Entsprechend Fig. 21 ist vor einer langgestreckten Lichtquelle 31, die als Leuchtstofflampe ausgebildet sein kann, eine lichtundurchlässige Blende 28 angeordnet, die in Richtung der Normalen 32 zur Oberfläche der Karosserie ausgerichtet ist. Auf die Blende 28 ist eine Haube 29, 30 aufgesetzt, die zwei sich zu einer Spitze verjüngende Seitenflächen 29, 30 aufweist, wodurch sich ein dreieckiger Querschnitt für die Leuchte ergibt. Allerdings kann auch die Spitze abgeflacht sein. Die Seitenflächen sind lichtdurchlässig und können transluzent oder prismatisch oder dergleichen ausgebildet sein. Da die der Karosserie zugewandte Fläche der Leuchte 13 in dem durch den von den Seitenflächen 29, 30 eingeschlossenen Winkelbereich lichtundurchlässig ist, leistet sie in dieser Richtung keinen Beitrag zur Beleuchtungsstärke auf der abzumusternden Fläche der Karosserie. Praktische Versuche haben gezeigt, daß damit eine wesentliche Verbesserung der Kontrasterkennung erreicht wird, die auch für helle Karosserien ausreichend ist. Die Leuchte erscheint aus der Richtung 32 abgeblendet und aus schrägen seitlichen Richtung 33, 34 sind die lichtabstrahlenden Flächen 29, 30 sichtbar. Diese werden aus dem Innenraum durch die mindestens eine Lampe 31 hinterleuchtet. Dadurch, daß sich die lichtabstrahlenden Flächen 30 und 29 verjüngen, bleibt die Leuchte in dem von den Seitenflächen vorgegebenen Winkelbereich um die Richtung 32 herum dunkel. Insbesondere ist diese Leuchte geeignet, um Fehler unter besonders flachen Beobachtungswinkeln zu erkennen. Unter steilen Beobachtungswinkeln zur Oberfläche nahe der Richtung 32 verkürzen sich die Flächen 29 und 30 und sind nur noch als schmale Striche sichtbar.

Dieser Nachteil wird durch die Maßnahmen beseitigt, die in Fig. 22 dargestellt sind. In dieser Figur sind an der Haube an der zu der Blende 28 entfernt liegenden Seite Reflektoren 35, 36 beispielsweise etwa rechtwinklig zu diesen angebracht. Durch diese Reflektoren 35 und 36, die eine leicht gekrümmte Form aufweisen und gerichtet reflektieren, werden die lichtabstrahlenden Flächen 29 und 30 in Richtungen beginnend mit den Richtungen 37 und 38 abgebildet, wobei diese Richtungen 37, 38 in der Ebene der Seitenflächen 29, 30 der Haube liegen. Ausgehend von diesen Richtung 37, 38 in Richtungen 33, 34 von der Normalen 32 weg werden entsprechend dem Cut-Off-Prinzip die leuchtenden Flächen 29, 30 schlagartig sichtbar. Dadurch werden auf der Karosserie unter steileren Winkeln bereits größere Flächen abgebildet, ohne daß eine direkte Beleuchtung der Karosserie erfolgt. Fig. 22 zeigt eine weitere Leuchte zur Darstellung der Leuchteneigenschaften der ersten Beleuchtungskomponente. Hierbei wird auf die lichtabstrahlenden Seitenflächen 29 und 30 verzichtet und die Lampe 31, die durch die Blende 39 abgeschirmt wird, wird direkt durch hinter der Lampe 31 angeordnete im wesentlichen V förmige und gekrümmte Reflektoren 40 und 41 in die gewünschte Richtung gelenkt. Während die Reflektoren bei entsprechender Gestaltung unter den Winkeln 37 und 38, die in diesem Fall durch die Blendenkante vorgegeben sind, noch dunkel bleiben, erscheinen sie unter den Winkeln 33 und 34 voll ausgeleuchtet.

Selbstverständlich können die Reflektoren auch lediglich einseitig angeordnet sein, ebenso können die Leuchten nach Fig. 21 und 22 auch lediglich eine lichtabstrahlende Fläche enthalten.

## Patentansprüche

1. Beleuchtungsanlage zur Abmusterung von Oberflächenfehlern auf glänzenden Oberflächen insbesondere lackierten Automobilkarosserien, die mindestens zwei Beleuchtungskomponenten aufweist, wobei die erste Beleuchtungskomponente zur Abmusterung topografischer Fehlerarten dient und von einer Leuchtenanordnung erzeugt wird, deren Leuchtdichtestruktur mit Hell-Dunkelkanten auf der abzumusternden Oberfläche aus einer ersten Beobachtungsrichtung für topografische Fehlerarten erkennbar ist und wobei die zweite Beleuchtungskomponente zur Arbeitsfeldbeleuchtung und Abmusterung nicht-topografischer Fehlerarten dient und von einer Leuchtenanordnung erzeugt wird, die eine solche gebündelte Lichtstärkeverteilung aufweist, daß ihre auf die Oberfläche gerichtete Strahlung nicht in eine zweite Beobachtungsrichtung für nicht-topografische Fehlerarten reflektiert wird und wobei die Leuchtenanordnung für die erste Beleuchtungskomponente derart angeordnet oder ausgebildet ist, daß ihre auf der Oberfläche abgebildete Leuchtdichtestruktur nicht aus der zweiten Beobachtungsrichtung erkennbar ist.

2. Beleuchtungsanlage nach Anspruch 1, dadurch gekennzeichnet, daß die erste Beobachtungsrichtung für topografische Fehlerarten schräg in Bezug auf die abzumusternde Oberfläche ist, und die zweite Beobachtungsrichtung für nicht-topografische Fehlerarten senkrecht zur abzumusternden Oberfläche ausgerichtet ist.

3. Beleuchtungsanlage nach Anspruch 1 oder 2, dadurch gekennzeichnet, daß in den Beobachtungsrichtungen ein Beobachter vorgesehen ist, der als Person oder als elektrisches und/oder optisches Erfassungssystem ausgebildet ist.

4. Beleuchtungsanlage nach einem der Ansprüche 1 bis 3, dadurch gekennzeichnet, daß die Leuchtdichte der lichtabstrahlenden Flächen der Leuchtenanordnung für die erste Beleuchtungskomponente so gering wie möglich gewählt wird, derart, daß eine Direktblendung vermieden wird, aber ein ausreichender Kontrast der auf der Oberfläche erkennbaren Leuchtdichtestruktur gegeben ist.

5. Beleuchtungsanlage nach einem der Ansprüche 1 bis 4, dadurch gekennzeichnet, daß die Lichtstärke der Leuchtenanordnung für die zweite Beleuchtungskomponente so groß gewählt wird, daß die Beleuchtungsstärke der aus der zweiten Beobachtungsrichtung gesehenen Oberfläche für die Abmusterung ausreichend hoch ist.

6. Beleuchtungsanlage nach einem der Ansprüche 1 bis 5, dadurch gekennzeichnet, daß die Leuchtenanordnung für die erste Beleuchtungskomponente aus mehreren im Abstand zueinander angeordneten ununterbrochen oder aus mehreren Teilfeldern zusammengesetzten Leuchtbändern besteht, die bogenförmig oder in einem Vieleck zumindest teilweise um die abzumusternden Oberflächen herum angeordnet sind.

7. Beleuchtungsanlage nach einem der Ansprüche 1 bis 6, dadurch gekennzeichnet, daß die Leuchtenanordnung für die zweite Beleuchtungskomponente eine Vielzahl von Leuchten oder mindestens eine langgestreckte Leuchte aufweist, die nur in die zweite Beobachtungsrichtung enthaltenden Ebenen eine eng gebündelte Lichtverteilung aufweisen und schräg, vorzugsweise in einem Winkel von 45° auf die Oberfläche strahlen.

8. Beleuchtungsanlage nach einem der Ansprüche 1 bis 7, dadurch gekennzeichnet, daß die Leuchten der Leuchtenanordnung für die erste Beleuchtungskomponente in Abstrahlrichtungen entgegengesetzt zur zweiten Beobachtungsrichtung keine oder nur geringe Leuchtdichten besitzen.

9. Beleuchtungsanlage nach Anspruch 8, dadurch gekennzeichnet, daß die Leuchten der Leuchtenanordnung für die erste Beleuchtungskomponente auf der den Oberflächen zugewandten Seite in Richtungen schräg zu den Oberflächen einseitig oder zweiseitig Licht abstrahlen.

10. Beleuchtungsanlage nach Anspruch 8 oder Anspruch 9, dadurch gekennzeichnet, daß die Leuchten für die erste Beleuchtungskomponente auf der den Oberflächen zugewandten Seite jeweils mindestens eine Blende zur Abschirmung mindestens einer hinter der Blende angeordneten Lichtquelle und eine die Lichtquelle umgebende lichtdurchlässige Haube aufweisen, die von der Blende abgeschlossen wird und sich ausgehend von der Blende verjüngt.

11. Beleuchtungsanlage nach Anspruch 10, dadurch gekennzeichnet, daß an mindestens einer der Blende entgegengesetzten Seite der sich verjüngenden Haube ein überwiegend gerichtet reflektierender Reflektor angeordnet ist, der das Licht der jeweiligen Haubenseite in einen Winkelbereich reflektiert, der mit dem sich durch die Verjüngung ergebenden Winkelbereich weitgehend übereinstimmt.

12. Beleuchtungsanlage nach Anspruch 8 oder Anspruch 9, dadurch gekennzeichnet, daß die Leuchten für die erste Beleuchtungskomponente auf der den Oberflächen zugewandten Seite mindestens eine Blende zur Abschirmung mindestens einer hinter der Blende angeordneten Lichtquelle aufweist und daß hinter der mindestens einen Lichtquelle ein überwiegend gerichtet reflektierender Reflektor angeordnet ist, der derart ausgebildet ist, daß eine seitlich einseitig oder beidseitig schräg auf die Oberflächen gerichtete Lichtverteilung entsteht.

13. Beleuchtungsanlage nach einem der Ansprüche 1 bis 12, dadurch gekennzeichnet, daß die Leuchten für die zweite Beleuchtungskomponente zur besseren Erkennbarkeit der Leuchtdichtestruktur der ersten Beleuchtungskomponente dimmbar sind.
